# EUROPÄISCHE PATENTSCHRIFT

(11) **EP 2 625 582 B1**
(45) Veröffentlichungstag und Bekanntmachung des Hinweises auf die Patenterteilung: **17.07.2019**
(21) Anmeldenummer: 11749791.7
(22) Anmeldetag: 18.08.2011
(51) Int. Cl.: G06F 3/0488, G06F 3/0481, G06T 19/00

(54) **COMPUTER UND VERFAHREN ZUR VISUELLEN NAVIGATION IN EINEM DREIDIMENSIONALEN BILDDATENSATZ**
COMPUTER AND METHOD FOR VISUALLY NAVIGATING IN A THREE-DIMENSIONAL IMAGE DATA SET
ORDINATEUR ET PROCÉDÉ DE NAVIGATION VISUELLE DANS UN BLOC DE DONNÉES D'IMAGE TRIDIMENSIONNEL

(30) Priorität: 08.10.2010 DE 102010047779
(43) Veröffentlichungstag der Anmeldung: 14.08.2013
(60) Teilanmeldung: 18207483.1
(73) Patentinhaber: Hicat GmbH, 53177 Bonn (DE)
(72) Erfinder: HANSSEN, Nils, Bonn 53111 (DE); HEY, Joachim, 53639 Königswinter (DE)
(74) Vertreter: Braun-Dullaeus, Karl-Ulrich
(86) Internationale Anmeldenummer: PCT/EP2011/064196
(87) Internationale Veröffentlichungsnummer: WO 2012/045513

(56) Entgegenhaltungen:
- WO-A2-2010/076772
- US-A1- 2006 268 008
- US-A1- 2010 045 666
- US-A1- 2010 174 421
- US-A1- 2010 188 397
- ALVARO CASSINELLI ET AL: "Volume slicing display", ACM SIGGRAPH ASIA 2009 ART GALLERY & EMERGING TECHNOLOGIES: ADAPTATION ON, SIGGRAPH ASIA '09, 1. Januar 2009 (2009-01-01), Seite 88, XP55010269, New York, New York, USA DOI: 10.1145/1665137.1665207 ISBN: 978-1-60-558878-0

## Beschreibung

Die Erfindung betrifft ein Verfahren zur Auswahl und Darstellung einer zweidimensionalen Zielschnittebene aus einem dreidimensionalen Bilddatensatz eines Körperteils, wobei der dreidimensionale Bilddatensatz mit einem bildgebenden diagnostischen Verfahren aufgenommen ist, wobei die Zielschnittebene als ein Schnitt durch den dreidimensionalen Bilddatensatz auf einem Computerbildschirm einer handhabbaren Anzeigevorrichtung dargestellt wird und wobei eine Eingabe die dargestellte Zielschnittebene in einem Fixpunkt fixiert, wobei eine nachfolgende Bewegung des Computerbildschirms eine Rotation der Zielschnittebene unter Beibehaltung dieses Fixpunktes verursacht. Zudem betrifft die Erfindung eine Computereinrichtung zur Durchführung des Verfahrens.

Im Stand der Technik sind gattungsgemäße Verfahren bekannt. Beispielsweise ist es bekannt, einen Schnitt durch ein in den Raum projiziertes Hologramm auf einer opaken Glasplatte abzubilden. Zudem ist aus dem Artikel "The Volume Slicing Display" (Cassinelli, A. and Ishikawa, M. 2009. Volume slicing display. In ACM SIGGRAPH ASIA 2009 Art Gallery & Emerging Technologies: Adaptation (Yokohama, Japan, December 16 - 19, 2009). SIGGRAPH ASIA '09. ACM, New York, NY, 88-88. DOI= http://doi.acm.org/10.1145/1665137.1665207) bekannt, Daten aus dem dreidimensionalen Bilddatensatz auf eine handhabbaren Anzeigevorrichtung in Form einer Plexiglasplatte darzustellen, wobei die Bilddaten entweder durch Projektion auf der Anzeigevorrichtung sichtbar gemacht werden. In dem Artikel wird auch vorgeschlagen, dass die Anzeigevorrichtung selbst über einen Bildschirm verfügt.

Nach diesem Stand der Technik kann durch Bewegung der Plexiglasplatte relativ zu dem in den Raum projizierten Bilddatensatz durch das Objekt navigiert werden. Dabei ändert sich die auf der Plexiglasplatte dargestellte Schnittebene mit der Bewegung der Plexiglasplatte. Insbesondere können Bilddatensätze eines Körperteils, die durch einen tomographischen Scan aufgenommen wurden auf der Plexiglasplatte dargestellt werden. Zur visuellen Navigation durch das Körperteil und um unterschiedliche Schnittansichten des Körperteils auf der Anzeigevorrichtung darzustellen, wird diese im Raum und damit virtuell durch das quasi "im Raum stehende" Körperteil bewegt. Je nach Ausrichtung und Orientierung der Anzeigevorrichtung innerhalb des virtuellen Körperteils wird die entsprechende Schnittansicht durch das Körperteil auf der Anzeigevorrichtung angezeigt.

Zur Erkennung der Position, Ausrichtung und Orientierung der Plexiglasplatte in Relation zum Bilddatensatz werden demnach unter anderem optische Sensoren, insbesondere eine Kamera, eingesetzt. Anhand dieser Sensoren kann der Abstand zwischen dem Sensor und der Plexiglasplatte sowie deren Ausrichtung und Orientierung im Raum gemessen werden. So wird die Lage der Anzeigevorrichtung in Relation zum Bilddatensatz bestimmt. Die Abhängigkeit vom separaten optischen Sensor beschränkt die Bewegungsfreiheit der Anzeigevorrichtung auf einen Raum, der durch die Empfangskeule des Sensors begrenzt ist.

Diese räumliche Einschränkung bedeutet beispielsweise für die Verwendung der Vorrichtung in der Medizin, dass die Visualisierung des darzustellenden Bilddatensatzes quasi ortsfest und damit auf wenige Personen und die räumliche Umgebung beschränkt ist. Ein Einsatz einer derartigen Vorrichtung in verschiedenen Räumen, wie es in Krankenhäusern notwendig ist, macht eine mehrfache Anschaffung oder einen Transport der Vorrichtung notwendig. Erschwerend kommt hinzu, dass jedem Aufbau der Anzeigevorrichtung und des optischen Sensors eine Neukalibrierung und Neuausrichtung der Anzeigevorrichtung zum optischen Sensor in Relation zum darzustellenden Bilddatensatz erfolgen muss.

US 2010/0174421 A1 und US 2010/0045666 A1 beschreiben ein Verfahren und Systeme zur Auswahl und Darstellung einer zweidimensionalen Schnittansicht aus einem digitalen dreidimensionalen topographischen Bilddatensatz, wobei die Schnittebene auf einer tragbaren Anzeigevorrichtung angezeigt wird. Durch die kleinen Abmessungen eines Bildschirms der tragbaren Anzeigevorrichtung können auf dem Bildschirm nur Ausschnitte einer Landschaft dargestellt werden. Durch eine Positionsänderung der Anzeigevorrichtung, welche mittels Sensoren detektiert werden, ist die Schnittansicht änderbar, sodass andere Ausschnitte der Landschaft auf dem Bildschirm angezeigt werden. Ein ähnliches Verfahren ist zudem in US 2010/0188397 A1 beschrieben, wobei hierbei der Fokus auf ein Straßennavigationsgerät gerichtet ist, welches beispielsweise bei einer Richtungsänderung eines Fahrzeugs, die Ansicht auf einen Kartenausschnitt so verändert, dass die Navigation für einen Fahrer erleichtert wird.

US 2006/0268008 A1 ein Verfahren und Systeme zur Auswahl und Darstellung einer zweidimensionalen Schnittansicht aus einem zweidimensionalen digitalen Bildes, wobei die Schnittebene auf einer tragbaren Anzeigevorrichtung angezeigt wird. Durch eine Positionsänderung der Anzeigevorrichtung, welche mittels Sensoren detektiert werden, ist die Ansicht des Bildes änderbar. Das angezeigte Bild ist fixierbar, sodass eine Positionsänderung der Anzeigevorrichtung keine Änderung der Ansicht des Bildes zur Folge hat.

WO 2010/076772 A2 beschreibt ein Verfahren um ein Anwendungsprogramm zu steuern, welches auf einer tragbaren Anzeigevorrichtung implementiert ist. Hierbei zeigt die tragbare Anzeigevorrichtung das Anwendungsprogramm in Form einer grafischen Oberfläche GUI auf einem Touch-Screen an. Eine Positionsänderung der tragbaren Anzeigevorrichtung, welche mittels Sensoren detektiert wird, wird in Steuerungsbefehle an die Anwendungssoftware übersetzt, sodass das Anwendungsprogramm durch Positionsänderungen steuerbar ist
Somit ist es Aufgabe der Erfindung, das Navigieren durch einen dreidimensionalen Bilddatensatz eines Körperteils zu vereinfachen und eine Visualisierung einer Schnittebene des Bilddatensatzes zu ermöglichen.

Diese Aufgabe wird durch das Verfahren nach Anspruch 1 und durch die Computereinrichtung nach Anspruch 8 gelöst. Vorteilhafte Ausführungsformen sind in den jeweiligen Unteransprüchen genannt.

Der wesentliche Grundgedanke der Erfindung liegt darin, dass der dreidimensionale Bilddatensatz virtuell in dem Raum positioniert wird, wobei die ursprüngliche Orientierung des Computerbildschirms eine Ursprungslage und damit eine Ursprungsschnittebene definiert. Dann wird die Bewegung des Computerbildschirms im Verhältnis zu der Ursprungslage registriert und rechnerisch in eine Bewegung im virtuellen Raum der dreidimensionalen Bilddaten ausgehend von der Ursprungsschnittebene in eine Zielschnittebene umgesetzt. Wie im Falle der Darstellung einer Schnittansicht durch ein im Raum stehendes Hologramm kann der Nutzer sich nun mit einem handhabbaren Bildschirm durch den nur virtuell im Raum stehenden Bilddatensatz bewegen. Dazu ist zunächst die ursprüngliche Positionierung des virtuell im Raum stehenden Bilddatensatzes und die Registrierung der Bewegung des handhabbaren Bildschirmes in Bezug auf den Bilddatensatz notwendig.

Dieser generelle Gedanke wird anspruchsgemäß dadurch umgesetzt, dass die handhabbare Anzeigevorrichtung einen Computerbildschirm aufweist. Dieser wird zunächst in einer Ursprungslage positioniert, wobei entsprechend der Ursprungslage eine Ursprungsebene aus dem Bilddatensatz definiert und als Schnittebene dargestellt wird. Wenn der Computerbildschirm aus der Ursprungslage heraus in eine Ziellage bewegt wird, wobei die Lageänderung in Bezug zur Ursprungslage mit einer in dem Computerbildschirm integrierten Sensor- und Auswerteeinrichtung registriert wird. In Bezug zur physikalischen Ursprungsebene wird eine der Bewegung des Computerbildschirms entsprechende Zielebene innerhalb des dreidimensionalen Bilddatensatzes errechnet und als Schnittebene auf dem Computerbildschirm dargestellt.

Erfindungsgemäß hat der Computer somit eine handhabbare Anzeigevorrichtung, die auch als externe Peripherie zum Computer vorgesehen sein kann. Die Anzeigevorrichtung und der Computer sind vorteilhafterweise in einem Tablet-PC vereint sein, der als tragbarerer Computer frei im Raum bewegt werden kann. Zunächst wird die Anzeigevorrichtung in einer Ursprungs- oder Ausgangslage an einem Ort positioniert und im Raum orientiert. Im darauf folgenden Schritt wird auf der in ihrer Ursprungslage befindlichen Anzeigevorrichtung eine Schnittansicht als Ursprungsschnittebene angezeigt, wobei bei dieser Initialisierung einer der unendliche vielen Schnittebenen aus dem Bilddatensatz auszuwählen ist. Vorteilhafterweise wird eine repräsentative Ursprungsschnittebene, beispielsweise eine mittlere horizontale Schnittebene ausgewählt. Die auf der Anzeigevorrichtung angezeigte Schnittansicht aus den Volumendaten fungiert damit als Initialansicht, welche in Ausgangs- bzw. Ursprungslage der Anzeigevorrichtung auf dieser angezeigt wird und von welcher ausgehend im Bilddatensatz visuell navigiert wird. Zur Navigation wird die Lage der Anzeigevorrichtung in Relation zum Bilddatensatz je nach Wunsch verändert und die Änderung der Lage mit Rücksicht auf die Ausgangslage von einer internen Sensor- und Auswerteeinrichtung ermittelt, welche an der Anzeigevorrichtung vorgesehen oder in dieser integriert angeordnet ist. Aus der bestimmten Lageänderung wird nun eine neue Schnittansicht ermittelt und zur Anzeige auf der Anzeigevorrichtung gebracht. Die Ermittlung geschieht in Kenntnis der Position und der Ausrichtung der Anzeigevorrichtung in Ursprungslage, der relativen Position und Ausrichtung der Anzeigevorrichtung im Bilddatensatz, welche der Ursprungsebene mit den Volumendaten aus dem Bilddatensatz entspricht, und der Lageänderung der Anzeigevorrichtung in Relation zur Ursprungslage und damit zum Bilddatensatz. In Folge zeigt die Anzeigevorrichtung, welche sich nach der Lageänderung in einer Ziellage befindet, die von der Lageänderung verursachte, ermittelte Schnittansicht an.

Die Vorteile der Erfindung bestehen insbesondere darin, dass eine komfortable zeiteffiziente und von der Umgebung absolut unabhängige Visualisierung des Bilddatensatzes und die visuelle Navigation durch den Bilddatensatz mit dem erfindungsgemäßen Verfahren und dem erfindungsgemäßen Computer zur Durchführung des Verfahrens ermöglicht werden. Besonders hervorzuheben ist dabei der Vorteil der räumlichen Bewegungsfreiheit, welche insbesondere nicht durch Navigationssysteme eingeschränkt ist, die separat zur Anzeigevorrichtung des erfindungsgemäßen Computers vorgesehen sind und damit die Positionierung der Anzeigevorrichtung durch räumliche Gegebenheiten oder die Ausrichtung und/oder Orientierung der Anzeigevorrichtung durch im Navigationssystem vorgesehene optische Sensoren entsprechend den Empfangs-Keulen einschränken. Vielmehr kann die Anzeigevorrichtung je nach Einsatz- und Verwendungszweck nicht ortsgebunden bewegt werden.

Um besonders zügig und komfortabel visuell durch den Bilddatensatz navigieren zu können, ist es zweckmäßig, an der Anzeigevorrichtung eine Eingabeeinrichtung vorzusehen, welche in zweckmäßiger Weiterbildung als Berührungseingabeeinrichtung ausgebildet ist. Vorzugsweise ist die Anzeigevorrichtung selbst als berührungsempfindlicher Bildschirm ("Touch Screen") zur Anzeige der Schnittansicht aus dem Bilddatensatz einerseits und zur Eingabe von Steuerungsinformationen zur Navigation durch den Bilddatensatz andererseits ausgebildet.

Zur Ermittlung von Lageänderungen des Computerbildschirms weist dieser eine integrierte Sensoreinrichtung vorteilhafterweise eine Beschleunigungssensorik auf, die Beschleunigungen in allen drei Raumrichtungen messen kann. Eine solche kann sich der Funktionalität kleiner Kreiselkompanten bedienen. Um Lageänderungen der Anzeigevorrichtung besonders detailliert und genau nachvollziehen zu können und auch gleichmäßige Bewegungen des Computerbildschirms zu erkennen, weist die Sensoreinrichtung vorteilhafterweise zusätzlich zur Beschleunigungssensorik eine Positionssensorik auf. Diese kann beispielsweise in der Art einer Wasserwaage Neigungen der Anzeigevorrichtung erkennen und/oder mit gleichmäßiger Geschwindigkeit bewältigte Strecken aus gemessenen Beschleunigungen und der gemessenen Zeit ermitteln. Es ist auch möglich, die Funktionalität eines Kompasses zur Richtungsbestimmung oder eines oder mehrere Gyroskope zur Ermittlung von Lageänderungen des Computerbildschirms einzusetzen.

Die visuelle Navigation im Bilddatensatz wird dadurch vereinfacht, dass sich die auf dem Computerbildschirm angezeigte Schnittansicht in einem oder mehreren Freiheitsgraden fixieren lässt. Um visuell durch die Volumendaten in Umgebung der angezeigten Schnittansicht navigieren zu können, wird hierzu ein Fixpunkt oder mehrere Fixpunkte in der angezeigten virtuellen Schnittansicht festgelegt. Bewegungen des Computerbildschirms werden dann im System der Bilddaten nur noch in Relation zu dem Fixpunkt oder der durch zwei Fixpunkte definierten Achse ausgeführt.

Weiterhin ist es zweckmäßig, den Computerbildschirm so auszubilden, dass eine Translationsbewegung des Computerbildschirms eine Translationsbewegung durch den Bilddatensatz ausgehend von der Schnittebene verursacht. Für eine Navigation durch den Bilddatensatz ausschließlich in Translationsrichtungen ist es zweckmäßig, die Rotationsfreiheitsgrade, insbesondere der Hoch-, Quer- und Längsachse, zu arretieren. Damit hängt die Darstellung nicht mehr vom Neigungswinkel des Bildschirms ab.

Um Details aus dem Bilddatensatz zu betrachten, ist es von Vorteil, am Computerbildschirm eine Zoomfunktion vorzusehen, womit die am Computerbildschirm dargestellte Schnittansicht vergrößert bzw. verkleinert werden kann. Gemäß einer weiteren vorteilhaften Ausgestaltung kann zusätzlich zur Zoomfunktion eine Zentralisierungsfunktion vorgesehen sein, womit der zu vergrößernde Ausschnitt der dargestellten Schnittansicht am Computerbildschirm zentriert angezeigt werden kann.

Um eine Ansicht einer auf dem Computerbildschirm dargestellten Schnittebene aus dem Bilddatensatz besonders präzise einstellen zu können, ist es zweckmäßig, für eine Navigation durch den Bilddatensatz, insbesondere in Translationsrichtungen, welche durch Bewegung, insbesondere Translationsbewegung, des Computerbildschirms verursacht wird, eine Untersetzung vorzusehen. Die Untersetzung bewirkt beispielsweise, dass eine Translationsbewegung des Computerbildschirms um eine Weglänge von einem Zentimeter eine Translationsbewegung im Bilddatensatz um eine Weglänge von einem Millimeter verursacht. Eine derartige Untersetzung ist besonders bei einer vergrößerten Schnittansicht im Computerbildschirm zweckmäßig, da eine übersichtliche Navigation durch den Bilddatensatz gegeben ist. Eine Einstellung der Untersetzung ist auch vorteilhaft, um kleinste Bewegungen des Computerbildschirms auszugleichen bzw. zu glätten, ohne dass sich die dargestellte Schnittansicht verändert.

Unter anderem ist es zweckmäßig, eine Schnittebene aus dem Bilddatensatz aus unterschiedlichen Projektionsrichtungen auf dem Computerbildschirm anzuzeigen, so dass einem Betrachter beim Blick auf den Computerbildschirm der Eindruck entsteht, beispielsweise direkt auf die Schnittebene zu blicken oder die Schnittebene aus der Perspektive zu sehen.

Zudem kann eine Funktion vorgesehen sein, bei der nicht nur eine einzelne Schnittebene sondern eine Projektion mehrerer paralleler Schnittebenen und damit eine Projektion darzustellen. Durch den erfindungsgemäßen Computerbildschirm kann die Projektionsrichtung (i.e. die Normale der Ebene) besonders intuitiv eingestellt werden, sodass wichtige Strukturen nicht überlagert dargestellt werden. Durch ein Markieren von zwei in einem Abstand zueinander parallelen Ebenen, beispielsweise durch Drücken und Halten eines Knopfes während einer Verschiebung, kann ein Projektionsbereich von vorgebbarer Stärke eingestellt werden.

Des weiteren ist eine stereoskopische Darstellung auf dem Computerbildschirm zweckmäßig. Dies dient der Hervorhebung und insbesondere der deutlichen Darstellung beispielsweise der Begrenzungskanten des Bilddatensatzes. Durch die stereoskopische Darstellung scheinen die Begrenzungslinien für den Betrachter aus der Ebene des Bildschirms herauszutreten und bieten dadurch ein intuitives Bezugssystem im dreidimensionalen Raum. Zudem ist es vorteilhaft, auch außerhalb der Schnittebene liegende anatomische Bereiche stereoskopisch darzustellen, um weitere räumliche Bezüge zu fixen oder individuell markierten Bereichen herzustellen. Dabei ist es zweckmäßig, dass solche eingeblendeten Bereiche beispielsweise durch Gesten markiert werden.

Gemäß vorteilhafter Weiterbildung wird für die stereoskopische Darstellung von Schnittansichten auf dem Computerbildschirm der Blickwinkel des Betrachters des Computerbildschirms berücksichtigt und fortwährend an Bewegungen des Betrachtens relativ zum Computerbildschirm bzw. an Bewegungen des Computerbildschirms relativ zum Betrachten angepasst.

Eine Schnittansicht kann auch in allen Freiheitsgraden fixiert ("eingefroren") werden, so dass der Computerbildschirm ohne Änderung der Schnittansicht von einem Ort zum anderen bewegt werden kann. Dabei kann der Fixpunkt mit der Eingabeeinrichtung, die vorteilhafterweise von einem Touch Screen ausgebildet ist, durch Berührung eines dem Fixpunkt entsprechenden Punktes auf dem Computerbildschirm festgelegt werden. Das Einfrieren geschieht vorteilhafterweise mit einem separaten Eingabemittel, beispielsweise einem eigens dafür vorgesehenen Button.

Zur Anzeige von Volumendaten auf dem Computerbildschirm, dessen Schnittansichten die vorgegebene Rotationsachse schneiden, ist es zweckmäßig, den Computerbildschirm relativ zum Bilddatensatz um die vorgegebene Rotationsachse zu rotieren. Gemäß vorteilhafter Ausgestaltung wird eine Rotation um den vorgegebenen Rotationspunkt oder die vorgegebene Rotationsachse durch eine Berührung erzielt. Zweckmäßigerweise ist hierfür ein geeigneter Berührungsweg, bei welchem die Berührung des Bildschirm fortbesteht, auf dem berührungsempfindlichen Bildschirm vorgesehen. Zur Einstellung des Rotationswinkels mit dem Rotationspunkt bzw. der Rotationsachse als Winkelscheitel eignet sich zweckmäßigerweise ein einem Fingerstreich gleichender Berührungsweg auf dem berührungsempfindlichen Bildschirm.

Nachfolgend wird die Erfindung anhand mehrerer Ausführungsbeispiele in Zeichnungen näher erläutert. Darin zeigen:
- **Figur 1**: die Positionierung und Ausrichtung eines Computerbildschirms in einer Ursprungslage,
- **Figur 2**: als Schnittebene durch einen Bilddatensatz gezeigte Volumendaten, die mit dem Computerbildschirm gemäß Figur 1 als Schnittansicht durch den Bilddatensatz visualisiert werden,
- **Figuren 3-5**: den Computerbildschirm gemäß Figur 1 in verschiedenen Lagen relativ zum Bilddatensatz,
- **Figur 6**: Volumendaten in einer Zielschnittebene durch den Bilddatensatz, welche auf dem Computerbildschirm gemäß Figur 5 als Schnittansicht angezeigt werden,
- **Figuren 7-9**: den Computerbildschirm, dessen angezeigte Schnittansicht in einem Fixpunkt fixiert ist, um den der Computerbildschirm relativ zum Bilddatensatz rotiert werden kann,
- **Figuren 10-11**: den Computerbildschirm, dessen angezeigte Schnittansicht in zwei Fixpunkten fixiert ist, welche in Verbindung eine Rotationsachse bilden, entlang der der Computerbildschirm relativ zum Bilddatensatz rotiert werden kann,
- **Figur 12**: den Computerbildschirm mit einer Schnittansicht, welche in zwei Fixpunkten gehalten ist, wobei der Computerbildschirm relativ zum Bilddatensatz durch Einstellung einer Rotationsberührung entlang einem hierfür vorgesehenen Berührungsweg um die Rotationsachse rotiert werden kann.

Einander entsprechende Teile sind in allen Figuren mit den gleichen Bezugszeichen versehen.

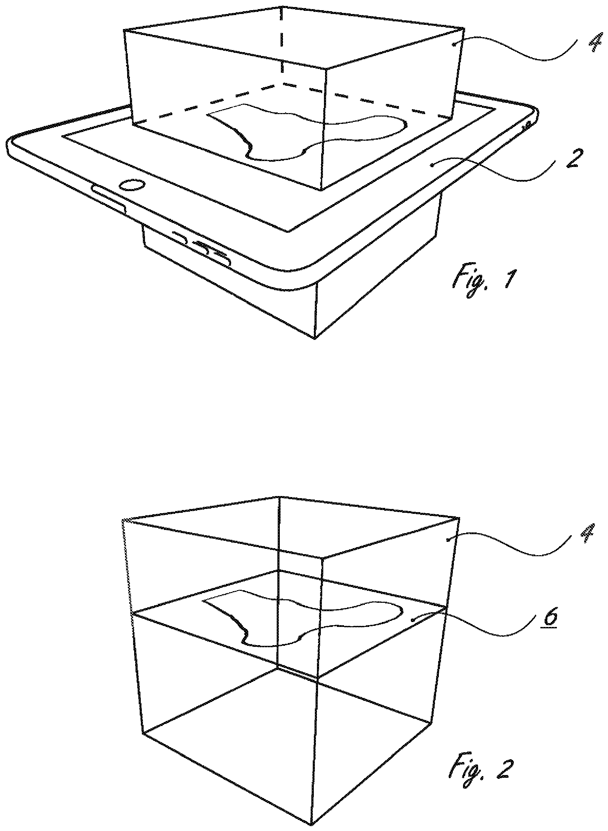

Figur 1 zeigt einen Computerbildschirm 2 mit einer integrierten Sensor- und Auswerteeinrichtung (nicht gezeigt). Der Computerbildschirm 2 ist in den vorliegenden Ausführungsbeispielen in einem als Tablet-PC ausgeführten Computer integriert. Im weiteren wird lediglich auf den Computerbildschirm 2 Bezug genommen. In Figur 1 ist zur Verdeutlichung ein Bilddatensatz als dreidimensionaler Körper 4 dargestellt, aus dem entsprechend der Positionierung des Computerbildschirm 2 eine Schnittebene errechnet und dargestellt wird. In Figur 1 ist der Computerbildschirm 2 waagerecht relativ zum Bilddatensatz und damit zum dreidimensionalen Körper 4 in einer Ursprungslage positioniert. Figur 2 zeigt in schematischer Darstellung den Körper 4 sowie eine Schnittebene 6 aus dem Bilddatensatz, die in der Positionierung des Computerbildschirms 2, wie in Figur 1 gezeigt, als Schnittansicht auf dem Computerbildschirm 2 dargestellt wird.

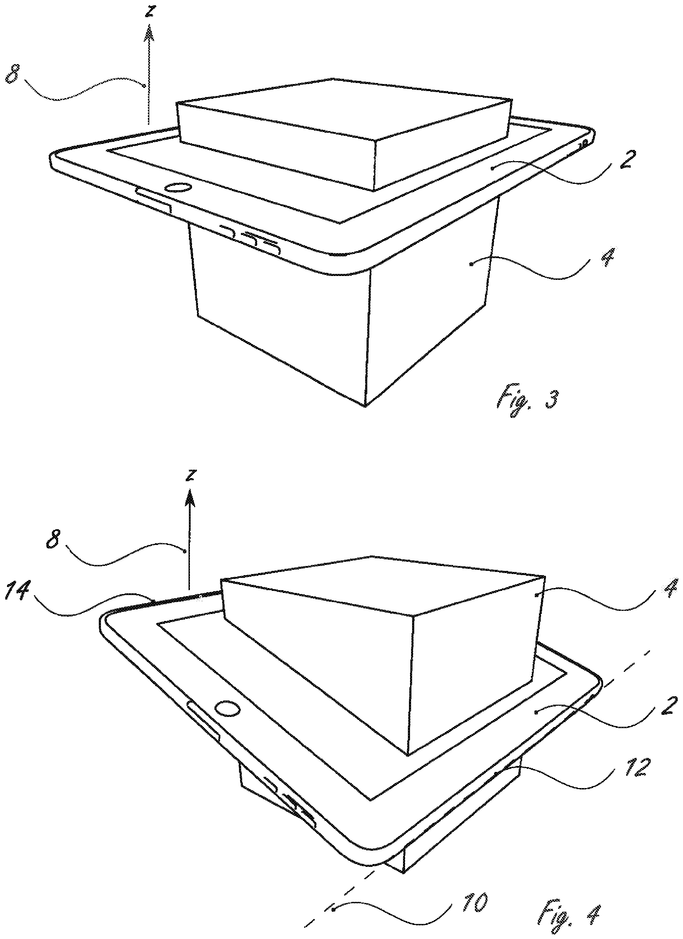

Im Vergleich zu Figur 1 ist der Computerbildschirm 2 in Figur 3 relativ zum Bilddatensatz und damit zum virtuellen dreidimensionalen Körper 4, in einer translatorischen Bewegung in der mit dem Pfeil 8 gekennzeichneten z-Richtung aus der Ursprungslage herausbewegt. Die in dem Computerbildschirm integrierte Sensor- und Auswerteeinrichtung (nicht gezeigt) nimmt diese translatorische Bewegung wahr, bestimmt die Lageänderung relativ zum dreidimensionalen Körper 4 und ermittelt anhand dessen die Ziellage des Computerbildschirms 2 und die Volumendaten aus dem Bilddatensatz, die in der Ziellage des Computerbildschirms als Zielschnittebene durch den Bilddatensatz dargestellt werden.

Figur 4 zeigt den Computerbildschirm in schematischer Darstellung nach einer anderen Lageänderung. In Figur 4 ist der Computerbildschirm 2 relativ zum Bilddatensatz - dem Körper 4 - um eine Rotationsachse 10 gekippt, respektive ist eine Randseite 14 des Computerbildschirms 2 im Vergleich zu einer gegenüber liegenden fixierten Randseite 12 in Z-Richtung (gekennzeichnet mit dem Pfeil 8) bewegt.

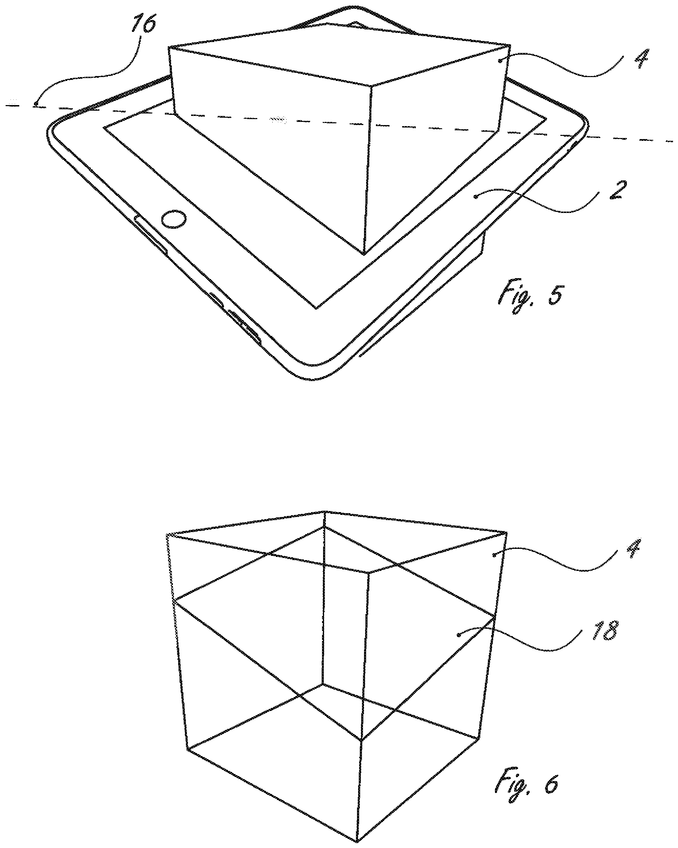

Figur 5 zeigt eine weitere Rotation des Computerbildschirms 2 um eine Rotationsachse 16 relativ zum Bilddatensatz. Die Sensor- und Auswerteeinrichtung (nicht gezeigt) errechnet aus der Lageänderung des Computerbildschirms 2 relativ zum Bilddatensatz Volumendaten aus dem Bilddatensatz zur Anzeige einer an die neue Position und Ausrichtung des Computerbildschirms 2 angepasste Schnittansicht, welche in Figur 6 als Schnittebene 18 im durch den dreidimensionalen Körper 4 gezeigten Bilddatensatz schematisch dargestellt ist.

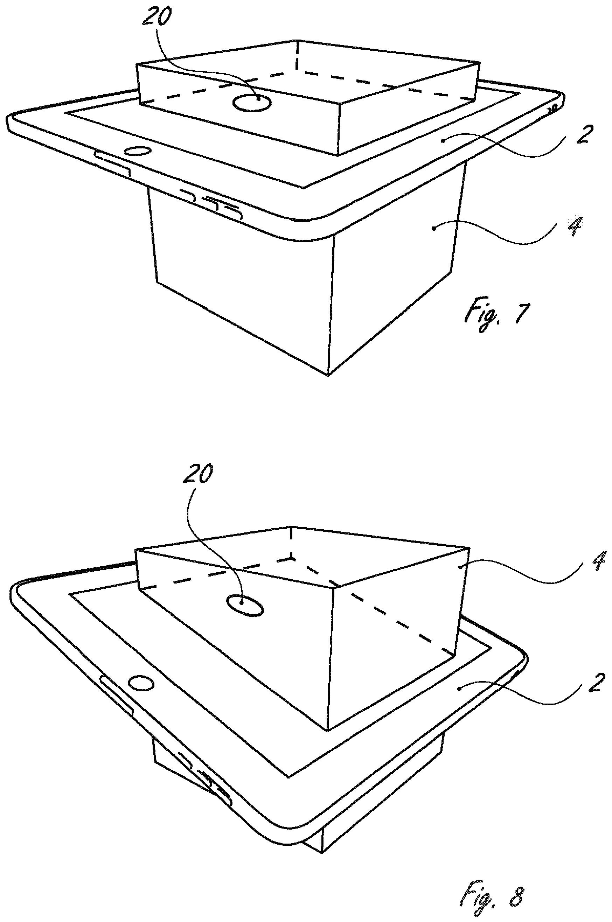

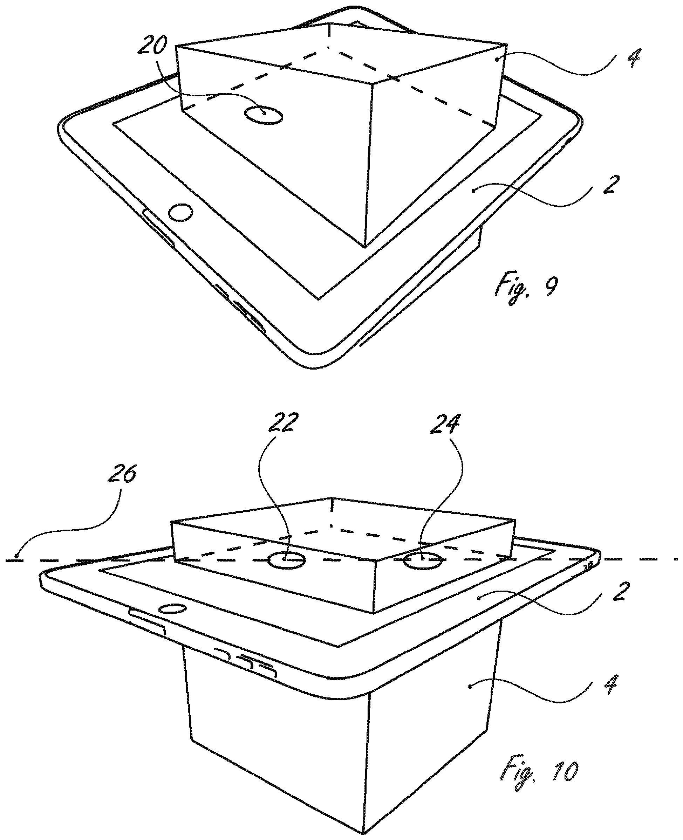

In den Figuren 7-9 ist die visuelle Navigation per Berührungseingabe durch den Bilddatensatz gezeigt. Dazu ist der Computerbildschirm 2 als Touchscreen ausgebildet. In Figur 7 ist in schematischer Darstellung der Computerbildschirm 2 in seiner Ursprungslage relativ zu dem mit dem dreidimensionalen Körper 4 veranschaulichten Bilddatensatz gezeigt. Vor einer Rotation des Computerbildschirms 2, wie in Figuren 8 und 9 gezeigt, wird ein als Rotationsursprung fungierender Fixpunkt 20 festgelegt. Der Fixpunkt 20 wird durch Berührung des Computerbildschirms 2 beispielsweise mit einem Stift oder mit dem Finger an der entsprechenden Stelle auf dem Computerbildschirm 2 platziert. Der Fixpunkt 20 dient zur Einschränkung der Freiheitsgrade, wonach der Computerbildschirm 2 rotiert und/oder gekippt werden kann. Dementsprechend kann der Computerbildschirm 2, wie in Figuren 8 und 9 gezeigt, um den festgelegten Fixpunkt 20 relativ zum Bilddatensatz, welcher als dreidimensionaler Körper 4 dargestellt ist, gekippt und rotiert werden.

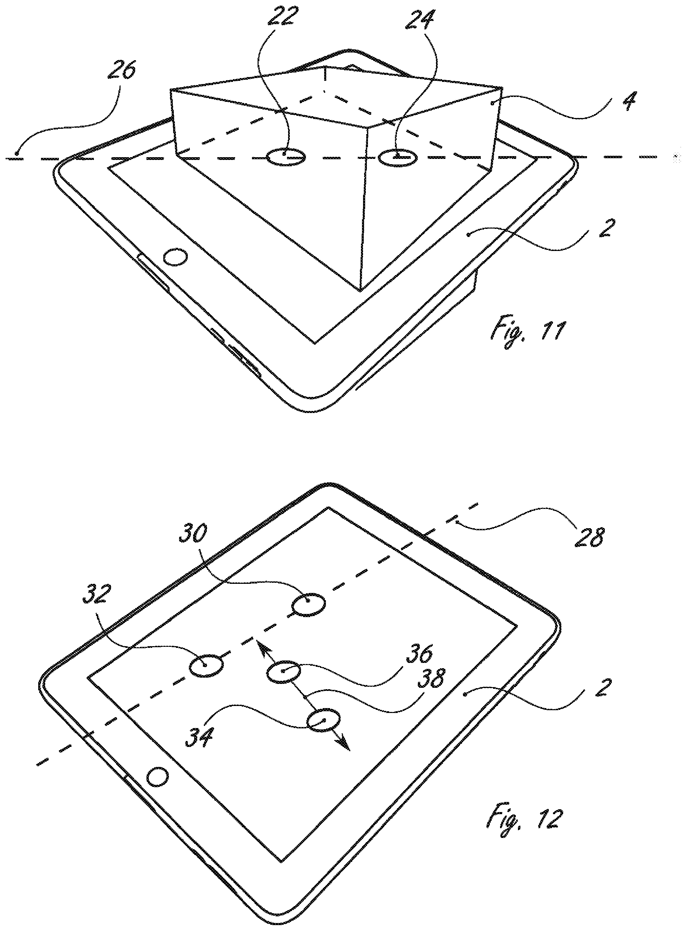

Das in Figuren 10 und 11 gezeigte Ausführungsbeispiel unterscheidet sich darin, dass die Rotationsfreiheitsgrade durch zwei in der angezeigten Schnittansicht des Computerbildschirms 2 festgelegte Fixpunkte 22, 24 eingeschränkt sind. Dabei sind die Fixpunkte 22, 24 zueinander beabstandet in der Schnittansicht der Anzeigevorrichtung 2 vorgesehen, sodass eine durch beide Fixpunkte 22, 24 gelegte Achse eine Rotationsachse 26 bildet, worum der Computerbildschirm 2, wie in Figur 11 gezeigt, relativ zum Bilddatensatz dargestellt, als dreidimensionaler Körper 4, rotiert werden kann.

Das in Figur 12 gezeigte Ausführungsbeispiel zeigt ein weiteres Detail bezüglich der Rotation des Computerbildschirms 2 relativ zum Bilddatensatz (nicht gezeigt) betreffend die Einstellung eines Rotationswinkels um die Rotationsachse 28, die durch die Fixpunkte 30 und 32 mittels Druckbeaufschlagung mittels Finger festgelegt wurde. Der Rotationswinkel (nicht gezeigt) in einem zur Rotationsachse 28 beabstandeten Punkt 34 wird durch eine Bewegung des Fingers (nicht gezeigt) mit fortwährender Berührung des Touch Screen Bildschirms eingestellt. Im vorliegenden Ausführungsbeispiel wird der Finger von Punkt 34 in Richtung des Punktes 36 zur Erstellung des Rotationswinkels entlang einer durch die Punkte 34 und 36 gebildeten Linie 38 verschoben, wobei sich die Größe des Winkels nach Weglänge zwischen den Punkten 34 und 36 richtet.

## Patentansprüche

1. Verfahren zur Auswahl und Darstellung einer zweidimensionalen Zielschnittebene (18) aus einem Volumendaten enthaltenden dreidimensionalen Bilddatensatz eines Körperteils, wobei der dreidimensionale Bilddatensatz mit einem bildgebenden diagnostischen Verfahren aufgenommen wurde, wobei die Zielschnittebene (18) als ein Schnitt durch den dreidimensionalen Bilddatensatz auf einem Computerbildschirm (2) einer handhabbaren Anzeigevorrichtung dargestellt wird, wobei der Computerbildschirm (2) in einer Ursprungslage positioniert wird, wobei auf dem in der Ursprungslage befindlichen Computerbildschirm (2) eine Ursprungsebene aus dem Bilddatensatz definiert und als Ursprungsschnittebene dargestellt wird,
dass der Computerbildschirm (2) aus der Ursprungslage heraus durch den Bilddatensatz in eine Ziellage bewegt wird, wobei die Lageänderung in Bezug zur Ursprungslage mit einer in dem Computerbildschirm (2) integrierten Sensor- und Auswerteeinrichtung registriert wird, dass die Bewegung des Computerbildschirms (2) rechnerisch in eine Bewegung im virtuellen Raum der dreidimensionalen Bilddaten ausgehend von der Ursprungsschnittebene in die in dem dreidimensionalen Bilddatensatz befindliche Zielschnittebene (18) umgesetzt wird und die Zielschnittebene (18) auf dem Computerbildschirm (2) dargestellt wird, **dadurch gekennzeichnet,**
**dass** eine Eingabe die dargestellte Zielschnittebene (18) in einem Fixpunkt fixiert, wobei eine nachfolgende Bewegung des Computerbildschirms (2) eine Rotation der Zielschnittebene (18) unter Beibehaltung dieses Fixpunktes verursacht.

2. Verfahren nach Anspruch 1,
**dadurch gekennzeichnet,**
**dass** der Computerbildschirm (2) von einer Person in den Händen gehalten und manuell bewegt wird.

3. Verfahren nach Anspruch 1 oder 2,
**dadurch gekennzeichnet,**
**dass** die Eingabe eine punktuelle Berührung eines Touch Screens ist.

4. Verfahren nach Anspruch 3,
**dadurch gekennzeichnet,**
**dass** durch die Eingabe zweier Fixpunkte (22, 24) eine Schnittlinie (26) fixiert wird, wobei eine nachfolgende Bewegung des Computerbildschirms (2) eine Rotation der Zielschnittebene (18) um diese Schnittlinie (26) verursacht.

5. Verfahren nach Anspruch 3 oder 4,
**dadurch gekennzeichnet,**
**dass** durch die Eingabe eine dargestellte Zielschnittebene (18) so fixiert wird, dass eine nachfolgende Bewegung des Computerbildschirms (2) eine Translationsbewegung durch den Bilddatensatz ausgehend von der Zielschnittebene verursacht.

6. Verfahren nach Anspruch 5,
**dadurch gekennzeichnet,**
**dass** durch die Eingabe die Rotationsfreiheitsgrade, insbesondere der Hoch-, Quer- und Längsachse, eingefroren werden.

7. Verfahren nach einem der vorherigen Ansprüche,
**dadurch gekennzeichnet,**
**dass** durch die Eingabe eine dargestellte Zielschnittebene (18) komplett fixiert wird, wobei eine nachfolgende Bewegung des Computerbildschirms (2) keine Auswirkung auf die Darstellung hat.

8. Computereinrichtung zur Durchführung des Verfahrens nach einem der vorherigen Ansprüche aufweisend einen manuell handhabbaren Flachbildschirm (2) zur Darstellung einer zweidimensionalen Zielschnittebene (18) aus einem in einem Speicher gespeicherten dreidimensionalen Bilddatensatz eines Körperteils (4) und aufweisend eine Sensoreinrichtung, die eine Bestimmung einer Lageänderung des Flachbildschirms (2) aus einer Ursprungslage heraus in eine Ziellage ermöglicht,
**gekennzeichnet durch**
eine Auswerteeinrichtung zur Berechnung der Zielschnittebene (18), die sich aus einer anfänglichen Ursprungsschnittebene (6) und der Lageänderung des Flachbildschirms (2) innerhalb des dreidimensionalen Bilddatensatzes in Bezug auf die Ursprungslage ergibt.

9. Computereinrichtung nach Anspruch 8,
**dadurch gekennzeichnet,**
**dass** der Flachbildschirm (2) ein Touch Screen Bildschirm ist, der eine Eingabe durch eine Geste eines Nutzers, insbesondere durch eine punktuelle Berührung, ermöglicht.

10. Computereinrichtung nach Anspruch 9,
**gekennzeichnet durch**
Mittel, die eine Fixierung mindestens eines Punktes durch Berührung des mindestens einen Punktes in der dargestellten Zielschnittebene (18) ermöglichen.

11. Computereinrichtung nach einem der Ansprüche 8 bis 10,
**dadurch gekennzeichnet,**
**dass** die Sensoreinrichtung Beschleunigungssensoren und/oder Gyroskope aufweist, die Beschleunigungen im Raum registrieren.

12. Computereinrichtung nach einem der Ansprüche 8 bis 11 wobei die Computereinrichtung ein Tablet-PC ist, der Sensoren zur Registrierung einer Lageänderung aufweist.

## Claims

1. Method for selecting and displaying a two-dimensional target section plane (18) from a three-dimensional image data set of a body part containing volume data, wherein the three-dimensional image data set was recorded using a diagnostic imaging method, wherein the target section plane (18) is displayed on a computer screen (2) of a manipulable display device as a section through the three-dimensional image data set, wherein the computer screen (2) is positioned in an original orientation, wherein an original plane is defined from the image data set on the computer screen (2) located in the original orientation and is displayed as the original section plane, that the computer screen (2) is displaced out of the original orientation through the image data set into a target orientation, wherein the change in orientation with respect to the original orientation is registered by means of a sensor and analysis device integrated into the computer screen (2), that the displacement of the computer screen (2) is mathematically converted into a displacement in the virtual space of the three-dimensional image data starting from the original section plane into the target section plane (18) located in the three-dimensional image data set, and the target section plane (18) is displayed on the computer screen (2),
**characterized in that**
an input fixes the target section plane (18) displayed in a fixed point, wherein a subsequent displacement of the computer screen (2) causes a rotation of the target section plane (18) while maintaining this fixed point.

2. Method according to claim 1,
**characterized in that**
the computer screen (2) is held in the hands of a person and is manually displaced.

3. Method according to claim 1 or 2,
**characterized in that**
the input is a point contact of a touch screen.

4. Method according to claim 3,
**characterized in that**
by inputting two fixed points (22, 24), a sectional line (26) is fixed, wherein a subsequent displacement of the computer screen (2) causes a rotation of the target sectional plane (18) about this sectional line (26).

5. Method according to claim 3 or 4,
**characterized in that**
a target sectional plane (18) displayed is fixed by the input so that a subsequent movement of the computer screen (2) causes a translational displacement through the image data set starting from the target sectional plane.

6. Method according to claim 5,
**characterized in that**
the degree of rotational freedom, in particular the vertical axis, transverse axis, and longitudinal axis, is frozen by the input.

7. Method according to any one of the preceding claims,
**characterized in that**
a target section plane (18) displayed is completely fixed by the input, wherein a subsequent displacement of the computer screen (2) has no effect on the display.

8. Computer device for carrying out the method according to any one of the preceding claims having a manually manipulable flat screen (2) for displaying a two-dimensional target section plane (18) from a three-dimensional image data set of a body part (4) stored in a memory and having a sensor device which facilitates a determination of a change of orientation of the flat screen (2) from an original orientation into a target orientation,
**characterized by**
an analysis device for calculating the target section plane (18) which results from an initial original section plane (6) and the change of orientation of the flat screen (2) within the three-dimensional image data set with respect to the original orientation.

9. Computer device according to claim 8,
**characterized in that**
the flat screen (2) is a touch screen, which facilitates an input through a gesture of the user, in particular through a point contact.

10. Computer device according to claim 9,
**characterized by**
means which facilitate a fixing of at least one point by contacting the at least one point in the target section plane (18) displayed.

11. Computer device according to any one of claims 8 to 10,
**characterized in that**
the sensor device has accelerometers and/or gyroscopes which register accelerations in space.

12. Computer device according to any one of claims 8 to 11, wherein the computer device is a tablet PC which has sensors for registering a change of orientation.

## Revendications

1. Procédé, destiné à sélectionner et à représenter un plan de coupe cible (18) dans un jeu de données d'images tridimensionnelles d'une partie du corps contenant des données de volume, le jeu de données d'images tridimensionnelles ayant été pris à l'aide d'un procédé d'imagerie diagnostique, le plan de coupe cible (18) étant représenté sous la forme d'une coupe à travers le jeu de données d'images tridimensionnelles sur un écran informatique (2) d'un dispositif d'affichage manipulable manuellement, l'écran informatique (2) étant positionné dans une position initiale, sur l'écran informatique (2) se trouvant en position initiale, un plan initial étant défini à partir du jeu de données d'images tridimensionnelles et représenté en tant que plan de coupe initial, en ce que l'écran informatique (2) est déplacé à partir de la position initiale à travers le jeu de données d'images dans une position cible, le changement de position par rapport à la position initiale étant enregistré à l'aide d'un système de capteurs et d'évaluation intégré dans l'écran informatique (2), le déplacement de l'écran informatique (2) étant converti arithmétiquement en un déplacement dans l'espace virtuel des données d'images tridimensionnelles, en partant du plan de coupe initial dans le plan de coupe cible se trouvant dans le jeu de données d'images tridimensionnelles et le plan de coupe cible (18) étant représenté sur l'écran informatique (2),
**caractérisé en ce**
**qu'**une saisie fixe le plan de coupe cible (18) dans un point fixe, un déplacement consécutif de l'écran informatique (2) provoquant une rotation du plan de coupe cible (18) en conservant ledit point fixe.

2. Procédé selon la revendication 1,
**caractérisé en ce que**
l'écran informatique (2) est maintenu dans les mains par une personne et déplacé manuellement.

3. Procédé selon la revendication 1 ou 2,
**caractérisé en ce que**
la saisie consiste dans un contact ponctuel sur un écran tactile.

4. Procédé selon la revendication 3,
**caractérisé en ce que**
la saisie de deux points fixes (22, 24) a pour effet de fixer une ligne de coupe (26), un déplacement consécutif de l'écran informatique (2) provoquant une rotation du plan de coupe cible (18) autour de ladite ligne de coupe (26) .

5. Procédé selon la revendication 3 ou 4,
**caractérisé en ce que**
la saisie a pour effet de fixer un plan de coupe cible (18) représenté, de telle sorte qu'un déplacement consécutif de l'écran informatique (2) provoque un déplacement en translation à travers le jeu de données d'images, à partir du plan de coupe cible.

6. Procédé selon la revendication 5,
**caractérisé en ce que**
la saisie a pour effet de geler les degrés de liberté en rotation, notamment de l'axe vertical, de l'axe transversal et de l'axe longitudinal.

7. Procédé selon l'une quelconque des revendications précédentes,
**caractérisé en ce que**
la saisie a pour effet de fixer complètement un plan de coupe cible (18), un déplacement consécutif de l'écran informatique (2) n'ayant aucun effet sur la représentation.

8. Système informatique, destiné à réaliser le procédé selon l'une quelconque des revendications précédentes, comportant un écran plat (2) manipulable manuellement, destiné à représenter un plan de coupe cible (18) bidimensionnel à partir d'un jeu de données d'images tridimensionnelles d'une partie du corps (4) et comportant un système de capteurs qui permet de déterminer un changement de position de l'écran plat (2) à partir d'une position initiale dans une position cible,
**caractérisé par**
un système d'évaluation, destiné à calculer le plan de coupe cible (18) qui résulte d'un plan de coupe initial (6) de départ et du changement de position de l'écran plat (2) à l'intérieur du jeu de données d'images tridimensionnelles en rapport à la position initiale.

9. Système informatique selon la revendication 8,
**caractérisé en ce que**
l'écran plat (2) est un écran tactile qui permet une saisie par un geste d'un utilisateur, notamment par un contact ponctuel.

10. Système informatique selon la revendication 9,
**caractérisé par**
des moyens qui permettent de fixer au moins un point par contact avec l'au moins un point dans le plan de coupe cible (18) représenté.

11. Système informatique selon l'une quelconque des revendications 8 à 10,
**caractérisé en ce que**
le système de capteurs comporte des capteurs d'accélération et/ou des gyroscopes qui enregistrent des accélérations dans l'espace.

12. Système informatique selon l'une quelconque des revendications 8 à 11, le système informatique étant une tablette PC qui comporte des capteurs destinés à enregistrer un changement de position.
